# EUROPÄISCHE PATENTANMELDUNG

(11) **EP 2 275 663 A2**
(43) Veröffentlichungstag der Anmeldung: **19.01.2011**
(21) Anmeldenummer: 10168282.1
(22) Anmeldetag: 02.07.2010
(51) Int. Cl.: F02K 3/06

(54) **Turbofantriebwerk**

(30) Priorität: 17.07.2009 DE 102009033755
(71) Anmelder: Rolls-Royce Deutschland Ltd & Co KG, 15827 Blankenfelde-Mahlow (DE)
(72) Erfinder: Clemen, Carsten, 15749, Mittenwalde (DE)
(74) Vertreter: Wablat Lange Karthaus

(57) **Zusammenfassung**

Bei einem Turbofantriebwerk hat eine innere Seitenwand (2) des Nebenstromkanals (3) stromab des Strömungsteilers (11) einen geraden, sich konisch erweiternden Verlauf, der stromab der Stützen, Streben und Leitschaufeln (7) glatt in einen kreisbogenförmigen Übergangsbereich (22) übergeht. Der Verlauf der Triebwerksverkleidung (1) ist an die Form der inneren Seitenwand (2) anpassbar, so dass der Nebenstromkanal (3) eine konisch nach außen gerichtete Form hat. Im Innern des Triebwerks sind in einem zwischen der inneren Seitenwand (2) und einer den Kernstromkanal (5) begrenzenden Trennwand (4) verbleibenden Raum die Getriebebox (14) und/oder andere Einbauten angeordnet. Die konische Ausbildung des Nebenstromkanals mit dem kreisbogenförmigen Übergangsbereich gewährleistet die Unterbringung der Getriebebox und anderer Einbauten im Innern des Triebwerks und ist zudem aeroakustisch und aerodynamisch vorteilhaft. (Fig. 1)

## Beschreibung

Die Erfindung betrifft ein Turbofantriebwerk, das einen Kernstromkanal mit darin angeordneten Kompressoren, Turbinen und einer Brennkammer sowie einen den Kernstromkanal umgebenden Nebenstromkanal umfasst, dessen an einen Strömungsteiler zur Aufteilung des vom Fan erzeugten Luftstroms anschließende innere Seitenwand gegenüber einer Triebwerksverkleidung durch Stützen, Streben und Leitschaufeln abgestützt ist, und das eine Getriebebox oder weitere Einbauten aufweist.

Turbofantriebwerke sind Zweistromtriebwerke mit einer Aufteilung des vom Fan erzeugten Luftstroms in einen inneren Luftstrom oder Kernstrom, der zu den Verdichtern, der Brennkammer und den Turbinen gelangt, und in einen äußeren Luftstrom bzw. Neben- oder Mantelstrom, durch den der überwiegende Teil des Schubes erzeugt wird. Der im Triebwerk zur Weiterleitung des äußeren Luftstroms ausgebildete Nebenstromkanal ist durch eine innere Seitenwand und eine äußere, die Triebwerksverkleidung bildende Seitenwand begrenzt. Die beiden Seitenwände sind durch Stützen, Streben und Leitschaufeln gegeneinander abgestützt. Die Aufteilung des vom Fan erzeugten Luftstroms in den inneren Luftstrom oder Kernstrom und den äußeren Luftstrom oder Nebenstrom erfolgt mithilfe eines der inneren Seitenwand zugeordneten Strömungsteilers oder Splitters. Die innere Seitenwand bzw. der Nebenstromkanal haben im Bereich des Splitters und der anschließenden Stützen, Streben und Leitschaufeln üblicherweise einen im Wesentlichen geraden Verlauf, der die Schallausbreitung begünstigt und hinsichtlich des erzeugten Lärmpegels und der Machzahl bei bestimmten Flugbedingungen nachteilig ist. An der Außenseite des Triebwerksgehäuses ist eine zum Antrieb bestimmter Zusatzgeräte, zum Beispiel eines Generators für die Stromversorgung des Flugzeugs oder Triebwerks, vorgesehene - externe - Getriebebox angeordnet, die über eine radiale Welle und ein inneres Getriebe mit einer an die Turbine angeschlossenen Antriebswelle verbunden ist. Diese Getriebeanordnung ist zum einen aufwendig und wirkt sich zum anderen ungünstig auf den Luftwiderstand während des Flugbetriebes aus. Andererseits kann die Form des Nebenstromkanals aufgrund von in das Triebwerk einzubindenden Komponenten, wie zum Beispiel eine große Niederdruckturbine oder einen Schubumkehrer oder ein inneres Getriebe, nicht frei gestaltet werden, so dass hohe Druckverluste eintreten und die erforderliche subsonische Machzahl (<1) bei Flugbedingungen mit hohem Nebenstromkanalmassenstrom nicht erreicht wird.

Der Erfindung liegt die Aufgabe zugrunde, ein Turbofantriebwerk mit einem Kernstromkanal und einem Nebenstromkanal sowie am Triebwerk vorgesehenen Einbauten so auszubilden, dass im Bereich des Nebenstromkanals aerodynamisch und aeroakustisch günstige Eigenschaften erreicht werden.

Bei einem Turbofantriebwerk der eingangs erwähnten Art, besteht der Grundgedanke der Erfindung darin, dass eine innere Seitenwand des Nebenstromkanals stromab des Strömungsteilers einen geraden, sich konisch erweiternden Verlauf hat, der stromab der Stützen, Streben und Leitschaufeln glatt in einen kreisbogenförmigen Übergangsbereich übergeht. Der Verlauf der Triebwerksverkleidung ist an die Form der inneren Seitenwand angepasst, so dass der Nebenstromkanal eine konisch nach außen gerichtete Form hat. Im Innern des Triebwerks sind in einem zwischen der inneren Seitenwand und einer den Kernstromkanal begrenzenden Trennwand verbleibenden Raum die Getriebebox und/oder andere Einbauten angeordnet. Die konische Ausbildung des Nebenstromkanals mit dem kreisbogenförmigen Übergangsbereich gewährleistet die Unterbringung der Getriebebox und anderer Einbauten im Innern des Triebwerks und ist zudem aeroakustisch und aerodynamisch vorteilhaft.

In weiterer Ausbildung der Erfindung liegt die Steigung der inneren Seitenwand in einem zwischen 20° und 30° liegenden Winkelbereich.

In Ausgestaltung der Erfindung ergibt sich der Radius des kreisbogenförmigen Übergangsbereichs in Abhängigkeit von der jeweiligen Winkellage der inneren Seitenwand und damit dem Abstand des Fußpunktes und des Höchstpunktes der inneren Seitenwand von der Triebwerksachse bei einem Winkel von 20° zu r_{20°}≥ 0,5 x Abstand, und bei einem Winkel von 30° zu r_{30°}≤ 1,5 x Abstand und bei einer zwischen 20 und 30° liegenden Steigung zu einem dazwischen liegenden Wert.

In weiterer Ausbildung der Erfindung hat die innere Seitenwand eine zwischen dem Fußpunkt und dem Höchstpunkt liegende, von der radialen Ausdehnung des Triebwerks abhängige Länge, wobei mindestens ein vom Fußpunkt ausgehendes Teilstück der inneren Seitenwand mit bestimmter Länge gerade und linear ansteigend verläuft und der sich bis zum Übergangsbereich anschließende Bereich eine andere Form haben kann.

Der Anfangspunkt oder Fußpunkt des linear ansteigenden Bereichs der inneren Seitenwand liegt in einem Bereich zwischen der Spitze des Strömungsteilers und der Vorderkante der im Nebenstromkanal angeordneten Leitschaufeln oder Streben.

Ein Ausführungsbeispiel der Erfindung wird anhand der Zeichnung näher erläutert. Es zeigen:
- Fig. 1: eine stark vereinfachte schematische Darstellung eines Turbofantriebwerks in zwei unterschiedli- chen Varianten der Triebwerksverkleidung und der Formgebung des Nebenstromkanals sowie der Anord- nung von Einbauten am Kernstromkanal;
- Fig. 2: eine zeichnerische Definition der Größen zur Be- stimmung der Form der inneren Seitenwand des Ne- benstromkanals; und
- Fig. 3: eine graphische Darstellung des Verlaufs der in- neren Seitenwand des Nebenstromkanals in unter- schiedlicher Länge und Winkellage.

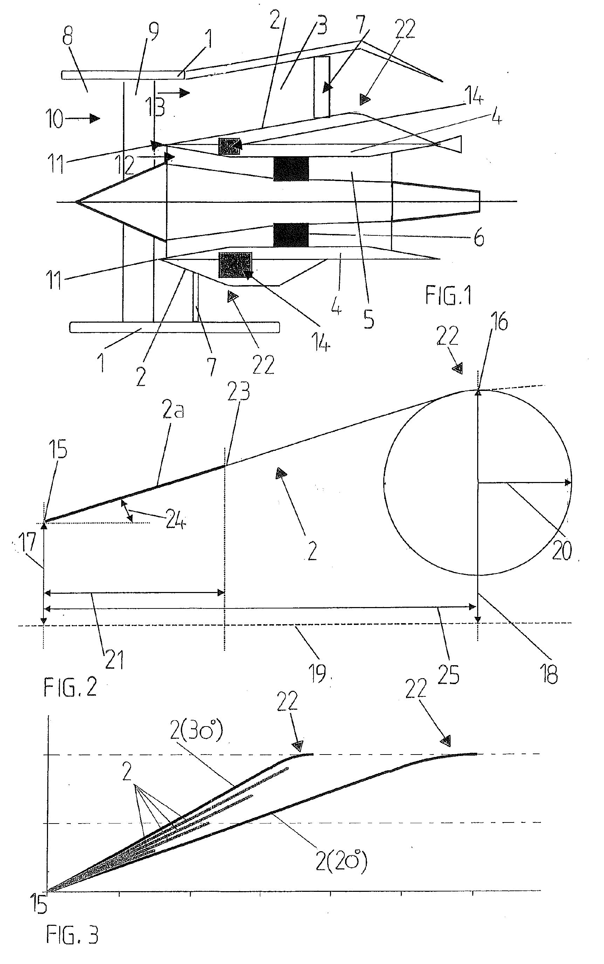

Das in Fig. 1 schematisch dargestellte Turbofantriebwerk umfasst eine Triebwerksverkleidung 1 und eine innere Seitenwand 2 zur Ausbildung eines Nebenstromkanals 3 sowie eine innere Trennwand 4, die einen Kernstromkanal 5 nach außen begrenzt. In dem Kernstromkanal 5 befinden sich Kompressoren, Turbinen und eine Brennkammer, die hier mit dem Bezugszeichen 6 nur schematisch wiedergegeben sind. Die Triebwerksverkleidung 1 und die innere Seitenwand 2 sind durch im Nebenstromkanal 3 befindliche Streben, Stützen und Leitschaufeln 7 gegeneinander abgestützt. Über einen Einlauf 8 und einen Fan 9 gelangt ein Luftstrom 10 in das Triebwerk, der hinter dem Fan 9 an einem Strömungsteiler 11 (Splitter), von dem die innere Seitenwand 2 und die innere Trennwand 4 ausgehen, in einen Kernstrom 12 und einen Nebenstrom 13 aufgeteilt wird. Die innere Seitenwand 2 des Nebenstromkanals 3 hat - ausgehend von dem Strömungsteiler 11 - einen mindestens bis stromab der Streben, Stützen und Leitschaufeln 7 reichenden, geraden, schräg nach außen gerichteten, das heißt sich konisch erweiternden Verlauf, durch den zwischen dem Kernstromkanal 5 und dem Nebenstromkanal 3 der erforderliche Raum zur Unterbringung von üblicherweise außen am Triebwerk angebrachten Einbauten 14, hier einer mit einer Triebwerkswelle verbundenen Getriebebox, am Kernstromkanal 5 im Innern des Triebwerks geschaffen wird. Entsprechend konisch erweitert ist auch die Form der Triebwerksverkleidung 1, das heißt die äußere Seitenwand des Nebenstromkanals 3.

Fig. 2 zeigt den Verlauf der inneren Seitenwand 2 des Nebenstromkanals 3, die einen Anfangspunkt oder Fußpunkt 15 und einen Höchstpunkt 16 hat, deren Abstand 17 bzw. 18 von der Triebwerksachse 19 frei wählbar ist. Der Fußpunkt 15 der inneren Seitenwand 2 ist in jedem Fall in einem zwischen der Spitze (Splitternase) des Strömungsteilers 11 und der Vorderkante der Leitschaufeln 7 des Fannachleitrades (OGV) liegenden Bereich und die Steigung der Seitenwand 2 liegt in einem Winkelbereich 24 von 20 bis 30° zur Triebwerksachse 19. An ihrem Höchstpunkt 16, von dem aus die innere Seitenwand 2 wieder gerade verläuft oder sich im Durchmesser verringert, ist der Verlauf der inneren Seitenwand 2 durch einen Radius 20 bestimmt, dessen Größe so gewählt ist, dass die entsprechende Kreisform der Seitenwand 2 glatt in den gerade verlaufende Teil der Seitenwand übergeht. Aufgrund der zwischen 20 und 30° liegenden Winkellage 24 der zwischen dem Fußpunkt 15 und dem Höchstpunkt 16 liegenden inneren Seitenwand 2 und dem entsprechend unterschiedlichen Abstand 18 zwischen dem Höchstpunkt 16 und der Triebwerksachse 19 ergibt sich der Radius 20 im Übergangsbereich 22 zwischen der konisch verlaufenden Seitenwand 2 und dem weiteren Kanalverlauf aus r_{20°} ≥ 0.5 x Abstand 18 bzw. r_{30°} ≤ 1,5 x Abstand 18 bzw. einem entsprechend dem zwischen 20° und 30° liegenden Winkel zwischen r_{20°} und r_{30°} liegenden Wert.

Mit dem Bezugszeichen 21 ist die von dem Fußpunkt 15 ausgehende Länge bzw. der Bereich der inneren Seitenwand 2 bezeichnet, in dem die innere Seitenwand 2 in jedem Fall einen linearen und zwischen 20° und 30° liegenden Verlauf hat. Dieser lineare Bereich kann im Übergangsbereich 22 mit dem Radius 20 enden, aber auch kürzer sein, wobei der zwischen dem Ende 23 des linearen Bereich 2a und dem Übergangsbereich 22 liegende Teil der Seitenwand 2 beliebig gestaltet sein kann. Die Länge 25 der Seitenwand zwischen dem Fußpunkt 15 und dem Höchstpunkt 16 ist abhängig von der radialen Ausdehnung, das heißt dem Abstand zwischen der Triebwerksachse und dem Höchstpunkt 16, entsprechend den an das Triebwerk gestellten Anforderungen. Fig. 3 zeigt Ausführungsbeispiele des linearen Verlaufs der inneren Seitenwand 2 des Nebenstromkanals 3 bei unterschiedlicher Länge 25 und unterschiedlicher Winkellage 24.

Der gemäß dem zuvor erläuterten Ausführungsbeispiel gestaltete Nebenstromkanal 3 gewährleistet die Anordnung von üblicherweise außen am Triebwerk angebrachten Einbauten, wie zum Beispiel der Getriebebox, am Kernstromkanal und genügt gleichzeitig hohen aerodynamischen und aeroakustischen Anforderungen.

### Bezugszeichenliste

- 1: Triebwerksverkleidung
- 2: Innere Seitenwand von 3
- 3: Nebenstromkanal
- 4: Trennwand von 5
- 5: Kernstromkanal
- 6: Kompressor/Turbine/Brennkammer
- 7: Leitschaufeln, Streben, Stützen
- 8: Einlauf
- 9: Fan
- 10: Luftstrom
- 11: Strömungsteiler (Splitter)
- 12: Kernstrom
- 13: Nebenstrom
- 14: Getriebebox/sonstige Einbauten
- 15: Fußpunkt von 2
- 16: Höchstpunkt von 2
- 17: Abstand zwischen 15 und 19
- 18: Abstand zwischen 16 und 19
- 19: Triebwerksachse
- 20: Radius im Übergangsbereich
- 21: Länge des linearen Bereichs von 2
- 22: Übergangsbereich
- 23: Ende des linearen Bereichs 2a
- 24: Winkelbereich, Winkellage v. 2
- 25: Länge der Seitenwand zw. 15 und 16

## Patentansprüche

1. Turbofantriebwerk, das einen Kernstromkanal (5) mit darin angeordneten Kompressoren, Turbinen und einer Brennkammer (6) sowie einen den Kernstromkanal (5) umgebenden Nebenstromkanal (3) umfasst, dessen an einen Strömungsteiler (11) zur Aufteilung des vom Fan (9) erzeugten Luftstroms (10) anschließende innere Seitenwand (2) gegenüber einer Triebwerksverkleidung (1) durch Stützen, Streben und Leitschaufeln (7) abgestützt ist, und das eine Getriebebox (14) oder weitere Einbauten aufweist, **dadurch gekennzeichnet, dass** die innere Seitenwand (2) stromab des Strömungsteilers (11) einen geraden, sich konisch erweiternden Verlauf hat, der stromab der Stützen, Streben und Leitschaufeln (7) glatt in einen kreisbogenförmigen Übergangsbereich (22) übergeht, wobei der Verlauf der Triebwerksverkleidung (1) an die Form der inneren Seitenwand (2) anpassbar ist, und wobei im Innern des Triebwerks in einem zwischen der inneren Seitenwand (2) und einer den Kernstromkanal (5) begrenzenden Trennwand (4) verbleibenden Raum die Getriebebox (14) und/oder andere Einbauten angeordnet sind.

2. Turbofantriebwerk nach Anspruch 1, **dadurch gekennzeichnet, dass** die Steigung der inneren Seitenwand (2) in einem zwischen 20° und 30° liegenden Winkelbereich (24) liegt.

3. Turbofantriebwerk nach Anspruch 2, **dadurch gekennzeichnet, dass** sich der Radius (20) des kreisbogenförmigen Übergangsbereichs (22) in Abhängigkeit von der jeweiligen Winkellage der inneren Seitenwand und damit dem Abstand (17, 18) des Fußpunktes (15) und des Höchstpunktes (16) der inneren Seitenwand (2) von der Triebwerksachse (19) zu r_{20°} ≥ 0,5 x Abstand (18), r_{30°} ≤ 1,5 x Abstand (18) oder einem dazwischen liegenden Wert ergibt.

4. Turbofantriebwerk nach Anspruch 1, **dadurch gekennzeichnet, dass** die innere Seitenwand (2) eine zwischen dem Fußpunkt (15) und dem Höchstpunkt (16) liegende, von der radialen Ausdehnung des Triebwerks abhängige Länge (25) hat, wobei mindestens ein vom Fußpunkt (15) ausgehender Bereich (2a) der inneren Seitenwand (2) mit einer Länge (21) gerade und linear ansteigend verläuft und der sich bis zum Übergangsbereich (22) anschließende Bereich eine andere Form haben kann.

5. Turbofantriebwerk nach Anspruch 1, **dadurch gekennzeichnet**, das der Fußpunkt (15) des linear ansteigenden Bereichs (2a) der inneren Seitenwand (2a) in einem Bereich zwischen der Spitze des Strömungsteilers (11) und der Vorderkante der im Nebenstromkanal (3) angeordneten Leitschaufeln oder Streben (7) liegt.
